# EUROPÄISCHE PATENTSCHRIFT

(11) **EP 2 907 152 B1**
(45) Veröffentlichungstag und Bekanntmachung des Hinweises auf die Patenterteilung: **17.08.2016**
(21) Anmeldenummer: 12815671.8
(22) Anmeldetag: 19.12.2012
(51) Int. Cl.: H01H 33/59, H01H 9/54, H01F 27/28, H01F 27/29, H01F 38/14, H02H 3/08

(54) **VORRICHTUNG ZUM SCHALTEN EINES GLEICHSTROMES IN EINEM POL EINES GLEICHSPANNUNGSNETZES**
DEVICE FOR SWITCHING A DIRECT CURRENT IN A POLE OF A DIRECT CURRENT NETWORK
DISPOSITIF POUR COMMUTER UN COURANT CONTINU DANS UN PÔLE D'UN RÉSEAU À COURANT CONTINU

(43) Veröffentlichungstag der Anmeldung: 19.08.2015
(73) Patentinhaber: Siemens Aktiengesellschaft, 80333 München (DE)
(72) Erfinder: ERGIN, Dominik, 91083 Baiersdorf (DE); KNAAK, Hans-Joachim, 91054 Erlangen (DE); ZENGER, Richard, 90409 Nürnberg (DE)
(86) Internationale Anmeldenummer: PCT/EP2012/076205
(87) Internationale Veröffentlichungsnummer: WO 2014/094847

(56) Entgegenhaltungen:
- EP-A1- 0 184 566
- EP-A1- 1 538 645
- EP-A1- 2 523 205
- WO-A1-2011/057675
- DE-A1- 2 700 375

## Beschreibung

Die Erfindung betrifft eine Vorrichtung zum Schalten eines Gleichstromes in einem Pol eines Gleichspannungsnetzes mit zwei Anschlussklemmen zum seriellen Verbinden mit dem Pol, einem sich zwischen den Anschlussklemmen erstreckenden Betriebsstromzweig mit wenigstens einem mechanischen Schalter, einem Abschaltzweig, in dem eine Leistungsschalteinheit angeordnet ist, die ein- und abschaltbare Leistungshalbleiterschalter aufweist und zum Abschalten hoher Fehlerströme eingerichtet ist, und Kommutierungsmitteln zum Kommutieren des Stromes von dem Betriebsstrompfad in den Abschaltzweig.

Eine solche Vorrichtung ist beispielsweise aus der WO 2011/057675 bekannt. Der dort verdeutlichte Gleichspannungsschalter weist einen Betriebsstrompfad mit einem mechanischen Schalter sowie einen Abschaltzweig auf, der dem Betriebsstrompfad parallel geschaltet ist. In dem Abschaltzweig ist eine Reihenschaltung von Leistungshalbleiterschaltern angeordnet, denen jeweils eine Freilaufdiode gegensinnig parallel geschaltet ist. Die aus Leistungshalbleiterschalter und Freilaufdiode bestehenden Schalteinheiten sind antiseriell angeordnet, wobei die abschaltbaren Leistungshalbleiterschalter in Reihe angeordnet sind und für jeden Leistungshalbleiterschalter ein entsprechender Leistungshalbleiterschalter mit entgegen gesetzter Durchlassrichtung vorgesehen ist. Auf diese Art und Weise kann der Strom in beiden Richtungen im Abschaltzweig unterbrochen werden. Im Betriebsstrompfad sind darüber hinaus aktive Kommutierungsmittel in Gestalt eines elektronischen Hilfsschalters angeordnet. Im Normalbetrieb fließt ein Betriebsstrom über den Betriebsstrompfad und somit über den geschlossenen mechanischen Schalter, da die Leistungshalbleiterschalter des Abschaltzweigs einen erhöhten Widerstand für den Gleichstrom darstellen. Zum Unterbrechen, beispielsweise eines Kurzschlussstromes als Fehlerstrom, wird der elektronische Hilfsschalter in seine Sperrstellung überführt. Hierdurch steigt der Widerstand im Betriebsstrompfad an, so dass der Gleichstrom in den Abschaltzweig kommutiert. Der schnelle mechanische Trennschalter kann daher stromlos geöffnet werden. Der über den Abschaltzweig geführte Kurzschlussstrom kann nun durch die Leistungshalbleiterschalter unterbrochen werden. Zur Aufnahme der im Gleichspannungsnetz gespeicherten und beim Schalten abzubauenden Energie sind Ableiter vorgesehen, die den Leistungshalbleiterschaltern des Abschaltzweiges parallel geschaltet sind.

Neben einer solchen aktiven leistungselektronischen Kommutierungseinrichtung sind Gleichspannungsschalter beschrieben worden, bei denen die Kommutierung des gesamten Stromes aufgrund der Lichtbogenspannung des mechanischen Schalters erfolgt, der in dem Betriebsstrompfad angeordnet ist. Es ist auch bekannt, dass ein leistungselektronisches Bauteil im Abschaltzweig eine aktive Kommutierung bereitstellen kann. Hierbei erzeugt das leistungselektronische Bauteil in der aus Betriebsstrompfad und Abschaltzweig gebildeten Masche einen Kreisstrom, der dem Betriebs- bzw. Fehlerstrom im Betriebsstrompfad entgegengesetzt ist. Im Schalter überlagern sich die beiden Ströme bei entsprechender Ansteuerung der Leistungshalbleiter zu null, so dass der Schalter stromlos geöffnet werden kann. Für eine solche aktive Kommutierung müssen die Leistungshalbleiterschalter sehr schnell eine große Leistung bereitstellen, da im Falle eines Kurzschlusses der Strom sehr schnell ansteigt.

Weitere Vorrichtungen zum Schalten eines Gleichstromes sind aus der EP 1 538 645 A1, die eine Vorrichtung zum Schalten eines Gleichstromes in einem Pol eines Gleichspannungsnetzes offenbart, der EP 2 523 205 A1, der DE 27 00 375 A1 un der EP 0 184 566 A1 bekannt.

Aufgabe der Erfindung ist es daher, eine Vorrichtung der eingangs genannten Art bereitzustellen, die kostengünstig ist, wenig Verluste erzeugt und gleichzeitig hohe Fehlerströme schnell schaltet.

Die Erfindung löst diese Aufgabe dadurch, dass die Kommutierungsmittel wenigstens ein induktives Bauteil aufweisen.

Erfindungsgemäß werden induktive Elemente oder Bauteile verwendet, um die Kommutierung im Falle eines Stromanstiegs, beispielsweise ausgelöst durch einen Kurzschluss, zu unterstützen. Im Normalbetrieb fließt der gesamte Betriebsstrom im stationären Zustand vollständig über den oder die mechanischen Schalter, da in der Leistungselektronik des Abschaltzweiges bei einem Stromfluss deutlich größere Spannungsabfälle entstehen würden als im mechanischen Schalter selbst und einem gegebenenfalls dazu in Reihe geschalteten induktiven Bauteil. Zum schnelleren Erreichen dieses gewünschten stationären Zustands, in dem der Strom über den Betriebsstrompfad fließt, kann die Leistungselektronik auch in den hochohmigen Zustand gesteuert werden. Mit anderen Worten können die Leistungshalbleiterschalter der Leistungsschalteinheit in ihre Sperrstellung überführt werden, um den Betriebs- oder Laststrom sicher über den Betriebspfad zu führen.

Ein konstanter Laststrom, der im Betriebsstrompfad fließt, wird auch bei einem Kurzschluss in Stromflussrichtung hinter der erfindungsgemäßen Vorrichtung weiterhin im Betriebsstrompfad fließen. Ein Fehlerstrom, dessen Steilheit hauptsächlich durch die Induktivität des Netzes L_{N} bestimmt ist, wird durch die im Verhältnis zur Netzinduktivität kleinen, aber im Verhältnis zur Induktivität der Leistungsschalteinheit großen Induktivität des oder der induktiven Bauteile automatisch in den Abschaltzweig gelenkt. Die Leistungselektronik - sei es als Teil der Leistungsschalteinheit, sei es als Hilfsschalter im Betriebsstrompfad - muss im Rahmen der Erfindung daher nicht mehr den Laststrom und den Fehlerstrom gemeinsam aus jedem zu öffnenden mechanischen Schalter in die Leistungsschalteinheit kommutieren, sondern lediglich den Laststrom.

Gemäß einer bevorzugten Ausgestaltung sind wenigstens zwei induktive Bauteile vorgesehen, die induktiv miteinander gekoppelt sind. Mit Hilfe der induktiven Kopplung von induktiven Bauteilen, die in unterschiedlichen Zweigen des Schalters angeordnet sind, kann die Kommutierung noch besser eingestellt werden. Darüber hinaus ist es möglich, den Stromfluss über den Schalter zu unterdrücken und somit den mechanischen Schalter ohne aktive Kommutierung nahezu stromlos zu öffnen.

Vorteilhafterweise umfassen die Kommutierungsmittel zusätzlich zu dem oder den induktiven Bauteilen ansteuerbare Leistungshalbleiterschalter, die zumindest teilweise zum Erzeugen einer Gegenspannung eingerichtet sind, welche die Fehlerströme in dem oder den zu öffnenden mechanischen Schaltern unterdrückt. Solche aktiven Kommutierungsmittel werden weiter unten noch genauer beschrieben. Aufgrund der induktiven Bauteile können die aktiven Kommutierungsmittel kostengünstiger ausgestaltet werden.

Gemäß einer diesbezüglich zweckmäßigen Ausgestaltung weisen die ansteuerbaren Leistungshalbleiterschalter wenigstens einen im Betriebsstrompfad angeordneten Thyristor auf. Der oder die Thyristoren sind im Rahmen der Erfindung mit einer Regelungs- oder Steuerungseinheit verknüpft. Die besagte Steuerungseinheit sorgt beispielsweise dafür, dass bei Normalbetrieb des Netzes der Nennstrom in den jeweils erforderlichen Richtungen über den Thyristor fließen kann. Hierzu wird der Thyristor beispielsweise fortwährend gezündet. Im Fehlerfall unterdrückt der Thyristor jedoch einen ungewollten Stromfluss über den oder die zu öffnenden mechanischen Schalter. Dies kann durch eine zweckmäßige Ansteuerung erfolgen. Parallel zu jedem Thyristor ist zweckmäßigerweise ein Überspannungsableiter oder ein anderer Überspannungsschutz angeordnet.

Gemäß einer ersten Variante der Erfindung sind in dem Betriebsstrompfad zwei mechanische Schalter angeordnet, wobei sich in Parallelschaltung zum Betriebsstrompfad zwischen den Anschlussklemmen ein Nebenstromzweig erstreckt, in dem ebenfalls zwei mechanische Schalter und/oder zwei Leistungshalbleiter angeordnet sind, wobei der Abschaltzweig einen zwischen den mechanischen Schaltern angeordneten Mittelzweigpotenzialpunkt des Betriebsstrompfads mit einem zwischen den mechanischen Schaltern oder den Leistungshalbleitern angeordneten Mittelzweigpotenzialpunkt des Nebenstromkreises verbindet. Gemäß dieser vorteilhaften Weiterentwicklung ist eine so genannte H-Schaltung bereitgestellt, die zur Unterstützung der Kommutierung mit induktiven Bauteilen ausgerüstet ist. Bei einer so genannten H-Brücke fließt der Strom bevorzugt über den Betriebsstrompfad. Allerdings ist grundsätzlich auch eine vollständige symmetrische Ausgestaltung der so genannten H-Brücke möglich. Der Betriebsstrom kann bei einer symmetrischen Ausgestaltung sowohl über den Betriebsstrompfad als auch über den Nebenstromzweig gleichberechtigt fließen. Die H-Schaltung weist den Vorteil auf, dass unabhängig von der Richtung des Stromes über den Schalter dieser zum Schalten immer in den Mittelzweig kommutiert wird. Die dort angeordnete Leistungsschalteinheit muss den Strom dann in nur einer Richtung schalten können. Im Kurzschlussfall unterstützen die induktiven Bauteile die Kommutierung sowohl des Betriebsstromes als auch des Kurzschlussstromes in den Abschaltzweig hinein, wo es zum Abschalten der Ströme kommt.

Zweckmäßigerweise ist jedes induktive Bauteil zwischen dem Mittelzweigpotenzialpunkt des Betriebsstrompfades und einem Schalter und/oder zwischen dem Mittelzweigpotenzialpunkt des Nebenstromzweiges und einem der Schalter oder der Leistungshalbleiter angeordnet.

Gemäß einer diesbezüglich zweckmäßigen Weiterentwicklung ist wenigstens ein induktives Bauteil im Abschaltzweig angeordnet und mit wenigstens einem induktiven Bauteil des Betriebsstrompfades und/oder des Nebenstrompfades induktiv gekoppelt.

Bei einer von der H-Schaltung abweichenden Variante der Erfindung ist der Betriebsstrompfad durch den Abschaltzweig überbrückbar. Gemäß dieser vorteilhaften Weiterentwicklung weist die erfindungsgemäße Vorrichtung, also der erfindungsgemäße Gleichspannungsleistungsschalter, lediglich zwei parallel zueinander geführte Zweige auf, nämlich den Betriebsstrompfad und dem diesen zumindest teilweise überbrückenden Abschaltzweig. Die Kommutierungsmittel sind in Gestalt von induktiven Bauteilen im Betriebsstrompfad, im Abschaltzweig und/gegebenenfalls zwischen einer Anschlussklemme und dem Verzweigungspunkt zwischen Betriebsstrompfad und Abschaltzweig angeordnet.

Vorteilhafterweise ist wenigstens ein induktives Bauteil in dem vom Abschaltzweig überbrückbaren Abschnitt des Betriebsstrompfades angeordnet. Bei Normalbetrieb fließt der Laststrom über den Betriebsstrompfad, in dem das oder die induktiven Bauteile angeordnet sind. Da sich der Strom nicht ändert, wird in dem induktiven Bauteil keine Spannung induziert. Bei einem Kurzschluss in Richtung des Betriebsstromes gesehen hinter der erfindungsgemäßen Vorrichtung steigt der Strom schnell an. Die Steilheit des Anstiegs wird wieder durch die Induktivität des angeschlossenen Gleichspannungsnetzes bestimmt. Der steile Stromanstieg bewirkt eine Spannung in dem induktiven Bauteil, die für eine Kommutierung des Kurzschlussstromes in den Abschaltzweig sorgt. Lediglich ein geringer Anteil des Kurzschlussstromes wird weiterhin über den Betriebsstromzweig, einschließlich des Schalters, fließen. Um auch diesen in den Abschaltzweig zu kommutieren, kann beispielsweise die Leistungselektronik der Leistungsschalteinheit eine Spannung erzeugen, die in der aus Abschaltzweig und dem von diesem überbrückten Abschnitt des Betriebsstrompfads erzeugten Masche einen Strom treibt, der dem Betriebsstrom in den zu öffnenden mechanischen Schaltern entgegengesetzt ist. Es wird für einen Nullstromdurchgang in dem oder den Schaltern gesorgt, so dass diese möglichst stromlos geöffnet werden können. Die Bildung eines Lichtbogens wird so vermieden oder kann schnell gelöscht werden.

Gemäß einer diesbezüglich abweichenden Variante der Erfindung ist ein induktives Bauteil zwischen einer Anschlussklemme und dem Verzweigungspunkt zwischen Betriebsstrompfad und Abschaltzweig angeordnet und mit einem weiteren induktiven Bauteil induktiv gekoppelt, das im vom Abschaltzweig überbrückten Abschnitt des Betriebsstrompfads oder im Abschaltzweig selbst angeordnet ist. Gemäß dieser vorteilhaften Weiterentwicklung der Erfindung werden nicht nur eine einzige Induktivität, also ein einziges induktives Bauteil, sondern mehrere induktive Bauteile eingesetzt, die induktiv miteinander gekoppelt sind. Insbesondere sind diese induktiven Bauteile über ein ferromagnetisches Material, beispielsweise einem Eisenkern, oder einem Eisenjoch oder einem Joch aus einem sonstigen ferromagnetischen Material, miteinander gekoppelt. Eines der induktiven Bauteile wird hierbei stets vom Betriebsstrom durchflossen. Das andere induktive Bauteil befindet sich nur in einem der beiden Strompfade, nämlich entweder im Betriebsstrompfad, oder aber in dem Abschaltzweig. Aufgrund dieser Anordnung können weitere Vorteile im Rahmen der Erfindung erzielt werden. So kann bei dieser Ausgestaltung der Erfindung eine vollständige Kommutierung des Stromes aus dem Betriebsstrompfad in den Abschaltzweig allein aufgrund der induktiven Bauteile erfolgen, wie hier noch ausführlich dargelegt wird.

Vorteilhafterweise ist zwischen jeder Anschlussklemme und jedem Verzweigungspunkt zwischen Betriebsstrompfad und Abschaltzweig ein induktives Bauteil angeordnet und mit einem weiteren induktiven Bauteil induktiv gekoppelt, das im Betriebsstrompfad oder im Abschaltzweig angeordnet ist.

Gemäß einer vorteilhaften Weiterentwicklung weisen die induktiv miteinander gekoppelten induktiven Bauteile Wicklungen auf, die einander entgegen gesetzte Wicklungsrichtungen aufweisen. Gemäß dieser vorteilhaften Weiterentwicklung können die von den induktiven Bauteilen erzeugten magnetischen Flüsse, in dem zur Kopplung eingesetzten Kern sich gegenseitig kompensieren, so dass der Stromfluss in eine Richtung, also beispielsweise über den Abschaltstromzweig, bevorzugt ist. Dies unterstützt die Kommutierung beträchtlich.

Hierbei ist es beispielsweise zweckmäßig, wenn die Anzahl der Wicklungen der beiden induktiv miteinander gekoppelten induktiven Bauteile gleich ist.

Abweichend hiervon ist die Anzahl der Wicklungen der beiden induktiv miteinander gekoppelten induktiven Bauteile unterschiedlich. Gemäß dieser Variante ist es möglich, in der aus Abschaltzweig und dem von diesen überbrückten Abschnitt des Betriebsstrompfads gebildeten Masche einen Kreisstrom zu erzeugen, der dafür sorgt, dass im Betriebsstrompfad ein Stromnulldurchgang erzeugt wird. Somit kann der mechanische Schalter fast stromlos geöffnet werden.

Gemäß einer bevorzugten Ausgestaltung der Erfindung verfügt die Leistungsschalteinheit über eine Reihenschaltung von zweipoligen Submodulen mit wenigstens einem Leistungshalbleiterschalter und Mitteln zum Abbau einer beim Schalten freiwerdenden Energie. Die Ausgestaltung der Submodule ist in diesem Rahmen grundsätzlich beliebig. So kann jedes Submodul beispielsweise nur einen ein- und abschaltbaren Leistungshalbleiterschalter aufweisen, der entweder rückwärts leitfähig oder aber dem eine Freilaufdiode gegensinnig parallel geschaltet ist.

Bevorzugt ist im Rahmen der Erfindung jedoch, dass jedes Submodul einen eigenen Energiespeicher und eine dem Energiespeicher parallel geschaltete Leistungshalbleiterschaltung aufweist, so dass an den beiden Anschlussklemmen eines jeden Submoduls entweder die an dem Energiespeicher abfallende Spannung oder aber eine Nullspannung erzeugbar ist. Die Leistungshalbleiterschaltung kann mit dem jeweiligen Energiespeicher eine so genannte Vollbrückenschaltung oder aber eine Halbbrückenschaltung ausbilden. Bei einer Vollbrückenschaltung gelangen vier ein- und abschaltbare Leistungshalbleiterschalter, wie beispielsweise IGBTs, GTOs, IGCTs oder dergleichen, zum Einsatz. Die vier Leistungshalbleiterschalter sind in zwei Reihenschaltungen aus jeweils zwei Leistungshalbleiterschaltern angeordnet. Jede der besagten Reihenschaltungen ist dem Energiespeicher parallel geschaltet, wobei eine Submodulanschlussklemme mit dem Potenzialpunkt zwischen den Leistungshalbleiterschaltern der ersten Reihenschaltung die zweite Submodulanschlussklemme mit dem Potenzialpunkt zwisehen den Leistungshalbleiterschaltern der zweiten Reihenschaltung verbunden ist. Somit kann an den beiden Submodulanschlussklemmen entweder die an dem Energiespeicher abfallende Spannung, eine Nullspannung oder aber die inverse Energiespeicherspannung erzeugt werden.

Bei einer Halbbrückenschaltung sind lediglich zwei Leistungshalbleiterschalter vorgesehen, die in einer einzigen Reihenschaltung angeordnet sind, die dem Energiespeicher parallel geschaltet ist. Eine Submodulanschlussklemme ist wieder mit dem Potenzialpunkt zwischen den Leistungshalbleiterschaltern der besagten Reihenschaltung verbunden. Die zweite Submodulanschlussklemme liegt direkt an einem Pol des Energiespeichers an. Somit können entweder die an dem Energiespeicher abfallende Spannung oder aber eine Nullspannung an den Submodulanschlussklemmen erzeugt werden.

Bei einer weiteren zweckmäßigen Ausgestaltung der Erfindung weisen die Kommutierungsmittel ausschließlich induktive Bauteile auf. Aufgrund dieser vorteilhaften Weiterentwicklung kann auf leistungselektronische also aktive Kommutierungsmittel vollständig verzichtet werden. Allerdings ist ein Schalten gemäß dieser vorteilhaften Weiterentwicklung nur möglich, wenn Fehlerströme i mit ausreichend großem di/dt entstehen. Ein Betriebsstrom kann mit Hilfe von ausschließlich auf induktive Bauteile basierenden Kommutierungsmitteln nicht geschaltet werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein erstes Ausführungsbeispiel der erfindungsgemäßen Vorrichtung,
- Figur 2: ein weiteres Ausführungsbeispiel der erfindungsgemäßen Vorrichtung,
- Figur 3: ein weiteres Ausführungsbeispiel der erfindungsgemäßen Vorrichtung,
- Figur 4: ein weiteres Ausführungsbeispiel der erfindungsgemäßen Vorrichtung,
- Figur 5: ein Diagramm zur schematischen Darstellung von Stromverläufen,
- Figur 6: ein weiteres Ausführungsbeispiel der erfindungsgemäßen Vorrichtung,
- Figur 7: ein weiteres Ausführungsbeispiel der erfindungsgemäßen Vorrichtung und
- Figur 8: ein weiteres Ausführungsbeispiel der erfindungsgemäßen Vorrichtung und
- Figur 9: ein weiteres Ausführungsbeispiel der erfindungsgemäßen Vorrichtung schematisch zeigen.

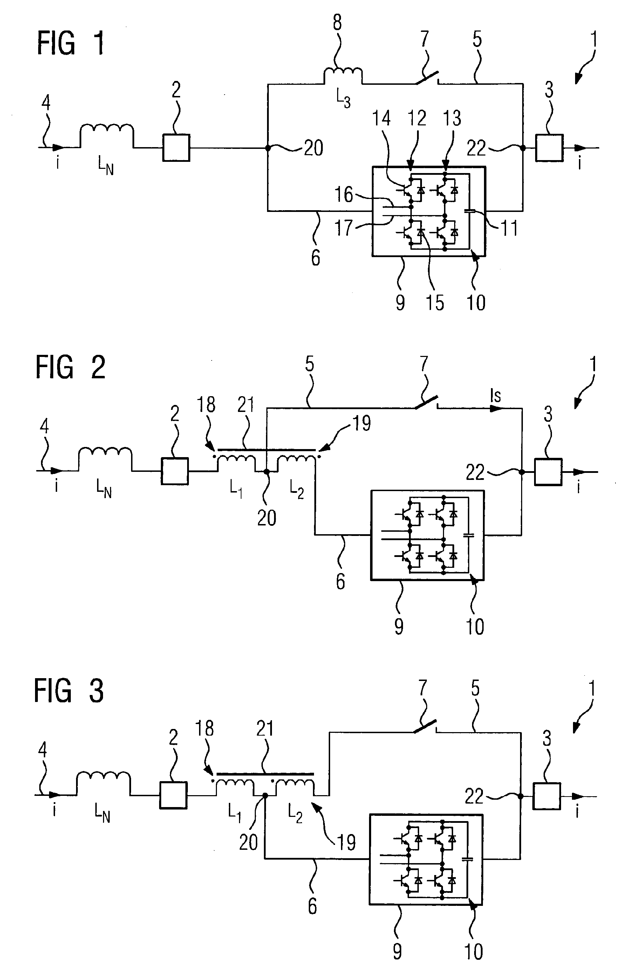

Figur 1 zeigt ein erstes Ausführungsbeispiel der erfindungsgemäßen Vorrichtung 1, die zwei Anschlussklemmen 2 und 3 aufweist, mit denen die Vorrichtung 1 seriell in einen Pol 4, mit anderen Worten einen Leiter, eines Gleichspannungsnetzes geschaltet ist, das figürlich nicht weiter dargestellt ist. Der Pol 4 weist die schematisch in der Figur 1 verdeutlichte Netzinduktivität L_{N} auf.

Die Vorrichtung 1 verfügt über einen Betriebsstrompfad 5, der von einem Abschaltzweig 6 überbrückt ist. In dem Betriebsstrompfad 5 sind ein schnell öffnender mechanischer Schalter 7 und ein induktives Bauteil 8 angeordnet, das die Induktivität L₃ aufweist. Das induktive Bauteil 8 ist beispielsweise eine Spule oder Drossel. In dem Abschaltzweig 6 ist eine Leistungsschalteinheit 9 angeordnet, die eine Reihenschaltung aus zweipoligen Submodulen 10 aufweist, von denen in Figur 1 lediglich ein Submodul 10 verdeutlicht ist.

Jedes Submodul 10 verfügt über einen Energiespeicher 11, dem zwei Reihenschaltungen 12 und 13 aus jeweils zwei ein- und abschaltbare Leistungshalbleiterschaltern 14, wie z.B. IGBTs, IGCTs oder GTOs parallel geschaltet sind. Jedem Leistungshalbleiterschalter 14 ist eine Freilaufdiode 15 gegensinnig parallel geschaltet. Eine erste Submodulanschlussklemme 16 ist mit einem Potenzialpunkt zwischen den Leistungshalbleiterschaltern 14 der ersten Reihenschaltung 12 und die zweite Submodulanschlussklemme 17 mit dem Potenzialpunkt zwischen den Leistungshalbleiterschaltern 14 der zweiten Reihenschaltung 13 verbunden. An den besagten Submodulanschlussklemmen 16 und 17 können somit die an dem Energiespeicher, hier ein Kondensator 11, abfallende Kondensatorspannung Uc eine Nullspannung oder aber die inverse Kondensatorspannung -Uc erzeugt werden.

Ferner umfasst die Leistungsschalteinheit 9 figürlich nicht dargestellte Ableiter zum Abführen der beim Schalten frei werdenden Energie. Werden die Leistungshalbleiterschalter 14 der Submodule 10 so angesteuert, dass eine Nullspannung an den Submodulanschlussklemmen 16 und 17 erzeugt ist, kann ein Gleichstrom über die gesamte Leistungsschalteinheit 9 fließen. Aufgrund des ohmschen Widerstandes der zahlreichen in Reihe geschalteten Leistungshalbleiter 13, 14 und stellt sich jedoch ein so großer Spannungsabfall an der Leistungsschalteinheit 9 ein, dass bei geschlossenem mechanischen Schalter 7 ein Gleichstrom ausschließlich über den Betriebsstrompfad 5 fließt.

In dem in Figur 1 gezeigten Ausführungsbeispiel fließt der Strom von links nach rechts, also von der Anschlussklemme 2 zur Anschlussklemme 3. Liegt ein Kurzschluss in Richtung des besagten Stromflusses hinter der Vorrichtung 1 vor, kommt es zu einem steilen Anstieg des über den Betriebsstrompfad 5 fließenden Stromes. Die dadurch hervorgerufene Änderung des magnetischen Flusses in dem induktiven Bauteil 8 induziert eine Spannung in dem induktiven Bauteil 8, die dafür sorgt, dass der Kurzschlussstrom vom Betriebsstrompfad 5 in den Abschaltstromzweig 6 kommutiert. Das induktive Bauteil 8 weist eine Induktivität L₃ auf, die im Verhältnis zur Netzinduktivität L_{N} klein, im Verhältnis zur Induktivität des Leistungsschalteinheit 9 jedoch groß ist. Der konstante Laststrom fließt jedoch auch im Kurzschlussfall weiterhin im Betriebsstrompfad 5. Dieser Laststrom kann durch entsprechende Ansteuerung der Leistungsschalteinheit 9 ebenfalls in den Abschaltzweig kommutiert werden, indem an der Leistungsschalteinheit 9 eine solche Spannung eingestellt wird, dass in der aus Betriebsstrompfad 5 und Abschaltzweig gebildeten Masche ein Kreisstrom fließt, der im mechanischen Schalter 7 dem Betriebsstrom und dort fließenden Kurzschlussstromanteile entgegengesetzt ist und für einen Nulldurchgang des Gesamtstromes sorgt. Der mechanische Schalter 7 kann dann fast stromlos öffnen. Die Leistung, welche durch die Leistungselektronik 9 zur Erzeugung eines Stromnulldurchgangs im mechanischen Schalter 7 notwendig ist, wird somit durch das induktive Bauteil 8 erheblich verringert.

Figur 2 zeigt ein weiteres Ausführungsbeispiel der erfindungsgemäßen Vorrichtung 1, die sich von dem in Figur 1 dargestellten Ausführungsbeispiel dadurch unterscheidet, dass die Kommutierungsmittel zwei induktive Bauteile 18 und 19 aufweisen, die wiederum beide als Spule oder Drossel ausgebildet sind. Das induktive Bauteil 18 ist zwischen einer der Anschlussklemmen 2 und einem ersten Verzweigungspunkt 20 zwischen Betriebsstrompfad 5 und Abschaltstromzweig 6 angeordnet. Das weitere induktive Bauteil 19 liegt nur im Abschaltzweig 6. Es ist erkennbar, dass die induktiven Bauteile 18 und 19 durch einen Kern 21 aus einem ferromagnetischen Material, hier Eisen, induktiv miteinander gekoppelt sind. Das Bauteil 19 weist einen Wickelsinn auf, der dem Wickelsinn von Bauteil 18 entgegen gesetzt ist. Mit anderen Worten weisen die induktiven Bauteile 18 und 19 entgegengesetzte Wicklungsrichtungen auf.

Dabei kann die Anzahl der Wicklungen der beiden induktiven Bauteilen 18, 19 gleich sein. Bei einem konstanten Laststrom, der in Figur 2 von links nach rechts, wie angedeutet, fließt, spielt die Induktivität der induktiven Bauteile 18 und 19 keine Rolle. Aufgrund des Spannungsabfalls an der Leistungsschalteinheit 9 fließt der konstante Laststrom jedoch über den Betriebsstrompfad 5. Selbstverständlich ist in diesem Normalzustand der mechanische Schalter 7 geschlossen. Bei einem Kurzschluss, in Stromflussrichtung hinter der Vorrichtung 1, kommt es zu einem Stromanstieg, di/dt ist größer als Null. Fließt der sich ändernde Strom sowohl durch das induktive Bauteil 18 als auch durch das induktive Bauteil 19, erzeugt dieser eine magnetische Flussänderung, die sich im Kern 21, über den die induktiven Bauteile 18 und 19 gekoppelt sind, kompensiert. Für diesen Strom ist daher nahezu keine Induktivität wirksam. Ein über den Betriebsstrompfad fließender Strom fließt hingegen ausschließlich durch das induktive Bauteil 18 mit der Induktivität L1. Diese Induktivität L1 ist für diesen wirksam und sorgt für dessen Kommutierung in den Abschaltzweig 6. Die Leistungsschalteinheit 9 kann nun einen Kreisstrom erzeugen, der nur den verbleibenden im Wesentlichen konstanten Anteil des Laststroms durch Erzeugung eines Gegenstroms im Schalter 7 zu Null reduziert.

Ist die Anzahl der Wicklungen des induktiven Bauteils 19 im Abschaltzweig 6 kleiner ist als die Anzahl der Wicklungen des induktiven Bauteils 18, wird die Induktivität L₂ des induktiven Bauteils 19 im Abschaltzweig kleiner als die Induktivität L₁ des induktiven Bauteils 18. Eine Stromänderung, wie beispielsweise bei einem Stromanstieg durch einen Kurzschluss in L₁, hat eine Änderung des magnetischen Flusses im Kern 21 im Gefolge. Auch in dem induktiven Bauteil 19 ein magnetischer Fluss induziert, der seiner Ursache entgegen wirkt. Aufgrund der geringeren Windungszahl des induktiven Bauteils 19 wird dort mehr Strom fließen, als über das induktive Bauteil 18, so dass sich die magnetischen Flüsse im Kern 21 kompensieren können. Der Strom steigt in dem Bauteil 19 daher stärker an, als der Fehlerstrom. Der zusätzliche Stromanstieg verursacht einen Kreisstrom, in der durch Abschaltzweig 6 und Betriebsstrompfad 5 gebildeten Masche. Der Kreisstrom wird durch die geringere Induktivität L₂ des induktiven Bauteils 19 im Abschaltzweig bewirkt. Er fließt im Abschaltzweig 6 in die gleiche Richtung wie der Kurzschlussstrom. Im Betriebsstrompfad 5 fließt er jedoch entgegengesetzt zum dort fließenden Laststrom und dem dort geringeren Kurzschlussstromanteil. Dieser Kreisstrom führt somit zu einer Reduzierung des Stromes im mechanischen Schalter 7. Bei geeigneter Bauteildimensionierung kann der Strom über den Schalter 7 nahezu unterdrückt werden. Das zusätzliche Eingreifen der Leistungselektronik der Leistungsschalteinheit 9 zur Erzeugung eines Stromnulldurchganges im Schalter 7 ist somit unnötig geworden. Die Kommutierung wird allein durch passive Bauelemente, nämlich durch die induktiven Bauteile 18 und 19 sowie deren induktiver Kopplung über den Kern 21 bewirkt.

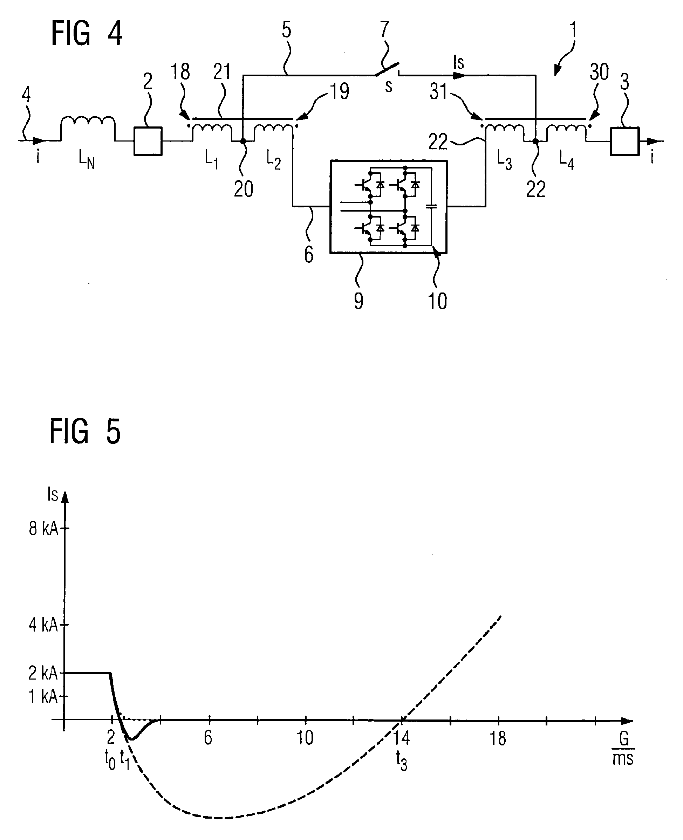

Figur 3 zeigt ein weiteres Ausführungsbeispiel der erfindungsgemäßen Vorrichtung 1, das sich von dem in Figur 2 gezeigten Ausführungsbeispiel dahin unterscheidet, dass die zweite Induktivität 19 nicht mehr im Abschaltzweig 6, sondern im Betriebsstrompfad 5 angeordnet ist. Bei dieser Variante fließt daher der konstante Laststrom in der in Figur 5 durch die Pfeile angedeuteten Richtung im niederohmschen Betriebsstrompfad 5 und verursacht, wie bei den anderen Ausführungsbeispielen, eine gewisse Grundmagnetisierung des Kerns 21. Ein beispielsweise aufgrund eines Kurzschlusses hervorgerufener Stromgradient in dem induktiven Bauteil 18 mit der Induktivität L₁ bewirkt einen sich ändernden magnetischen Fluss im Kern 21, wodurch sich in dem induktiven Bauteil 19 mit der Induktivität L₂ ein Strom einstellt, der seine Ursache entgegenwirkt und eine Flussänderung im Kern 21 unterdrückt.

Weisen das induktive Bauteil 18 und das induktive Bauteil 19 jeweils die gleiche Anzahl von Wicklungen, erzeugt eine Stromänderung di/dt im induktiven Bauteil 18 mit der Induktivität L₁ einen sich ändernden magnetischen Fluss. In dem induktiven Bauteil 19 mit der Induktivität L₂ stellt sich aufgrund der gleichen Windungszahl derselbe Stromanstieg ein, damit sich die beiden magnetischen Flüsse im Kern 21 kompensieren. Der Stromanstieg in dem induktiven Bauteil 19 und damit auch im Schalter 7 ist bezüglich des konstanten Laststroms negativ und führt daher früher oder später zu einem Strom gleich null im Schalter 7. Je kleiner das Verhältnis zwischen den Induktivitäten L₂/L₁ ist, desto früher kommt es zu einem Stromnulldurchgang im Schalter 7. Auch hier kann die Kommutierung des Stromes aus dem Betriebsstrompfad 5 in den Abschaltzweig 6 von der Leistungselektronik der Leistungsschalteinheit 9 unterstützt werden. Bei geeigneter Dimensionierung der induktiven Bauteile 18 und 19 ist eine Kommutierung jedoch ausschließlich durch die passiven induktiven Bauteile 18 und 19 möglich.

Figur 4 zeigt eine weitere Variante der Erfindung. Es ist erkennbar, dass neben den bereits im Zusammenhang mit Figur 2 beschriebenen Bauteilen, die hier entsprechend ausgestaltet sind oder ausgestaltete werden können, weitere induktive Bauteile vorgesehen sind. So ist zwischen dem zweiten Anschluss 3 und dem zweiten Verzweigungspunkt 22 ein zweites induktives Bauteil 30 in Gestalt einer Spule oder Drossel mit der Induktivität L₃ angeordnet. Das induktive Bauteil 30 ist mit einem im Abschaltstromzweig 6 angeordneten induktiven Bauteil 31 induktiv gekoppelt, das die Induktivität L₄ aufweist. Zur induktiven Kopplung dient wieder ein Kern 21 aus einem ferromagnetischen Material. Die Wirkungsweise der beiden zusätzlichen induktiven Bauteile 30 und 31 entspricht der bereits dargelegten Wirkungsweise der induktiven Bauteile 18 und 18. Selbstverständlich kann das induktive Bauteil 31 im Rahmen der Erfindung basierend auf dem Ausführungsbeispiel gemäß Figur 3 auch im Betriebsstrompfad 5 angeordnet sein.

Figur 5 zeigt bezüglich einer Vorrichtung 1 gemäß Figur 2 schematisch mit Hilfe der gestrichelten Linie den Verlauf des Stromes Iₛ im Betriebsstrompfad 5 von links nach rechts im Falle eines Kurzschlusses im Zeitpunkt t₀. t₀ liegt in Figur 5 bei 2 ms. Der Stromverlauf Iₛ erfährt sehr schnell, also nach 500 µs, bei t₁ einen Stromnulldurchgang, wobei gilt: t₁=t₀+500 µs. Die 500 µs sind hier nur beispielhaft zu verstehen. Wesentlich ist jedoch, dass die Zeitdauer ab dem Auftreten des Fehlers bis zum ersten Stromnulldurchgang deutlich kleiner ist als 1 ms. Da die übliche Schaltverzugszeit bei ca. 2 ms liegt, kann der erste Stromnulldurchgang nicht genutzt werden, um den mechanischen Schalter 7 nahezu stromlos zu öffnen. Aus der Figur 5 geht jedoch hervor, dass es im Zeitpunkt t₃ zu einem zweiten Stromnulldurchgang kommt. Da zwischen t₀ und t₃ sehr viel Zeit vergehen kann, kann auf den zweiten Stromnulldurchgang bei einigen Anwendungen nicht gewartet werden. Wie bereits mehrfach ausgeführt wurde, können jedoch aktive Kommutierungsmittel die Teil der Abschalteinheit 9 sind, in der aus Betriebsstrompfad 5 und Abschaltstromzweige 6 gebildeten Masche einen Kreisstrom treiben, der dem Strom im Schalter 7 entgegengesetzt ist. Dieser Kreisstrom beschleunigt das Auftreten des zweiten Stromnulldurchgangs. Der Stromverlauf Iₛ im Schalter 7 mit aktiver Kommutierung ist in Figur 5 mit Hilfe der durchgezogenen Linie schematisch verdeutlicht. Es ist erkennbar, dass auf diese Weise ein zweiter Stromnulldurchgang bereits nach 2 ms herbeigeführt werden kann, wobei der Strom anschließend nahezu bei Null verbleibt.

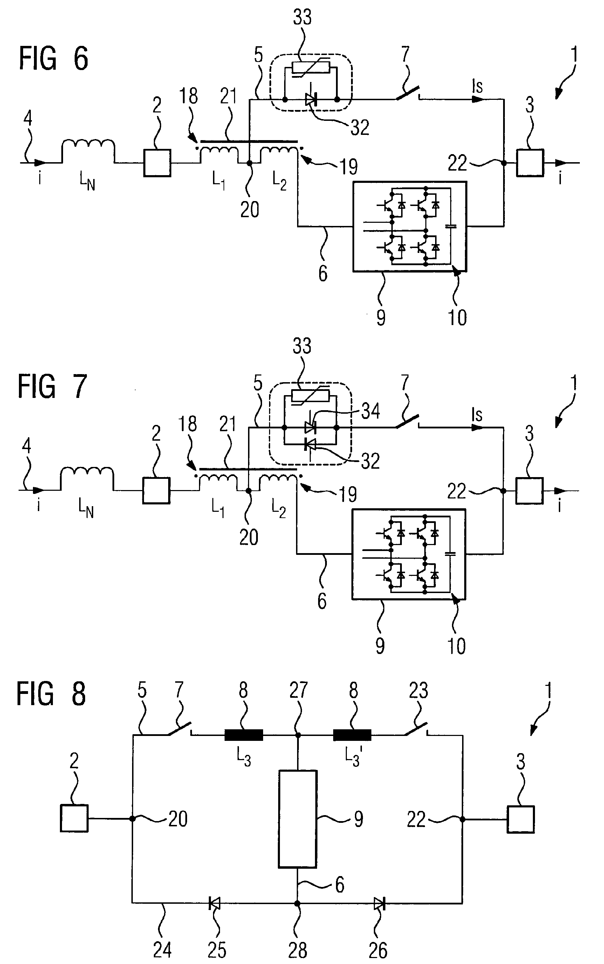

Darüber hinaus ist in Figur 5 ein dritter Stromverlauf durch eine punktierte Linie angezeigt. Ein solcher Stromverlauf kann mit einer Vorrichtung gemäß Figur 6 erhalten werden, die dem in Figur 2 gezeigten Ausführungsbeispiel weitestgehend entspricht, wobei jedoch im Betriebsstrompfad 5 ein Thyristor 32 angeordnet ist, dem ein Überspannungsableiter 33 parallel geschaltet ist. Der Thyristor 32 ist ein steuerbarer Leistungshalbleiterschalter, der jedoch nicht aktiv abgeschaltet werden kann.

Im Nennbetrieb fließt der Strom über den Betriebsstrompfad 5 und somit über den Thyristor 32 und den mechanischen Schalter 7 beispielsweise von Anschluss 2 zu Anschluss 3. Im Nennbetrieb wird der Thyristor 32 permanent nachgezündet, um seine Leitfähigkeit sicherzustellen. Bei einem Kurzschluss in Stromflussrichtung hinter der erfindungsgemäßen Vorrichtung 1 kommt es zu einem Stromanstieg dᵢ nach dₜ, so dass die induktiven Bauteile 18 und 19, die über den ferromagnetischen Kern 21 induktiv miteinander gekoppelt sind, für einen schnellen Stromnulldurchgang im Zeitpunkt tᵢ, siehe Figur 5, also bereits nach 500 µs. Da der Thyristor 32 nicht rückwärts leitfähig ist, bleibt der über den Betriebsstrompfad 5 fließende Strom ab dem Zeitpunkt t₁ bei Null. Werden die Zündbefehle an den Thyristor 32 unterbunden, bleibt der Stromfluss auch gleich Null, wenn sich wieder ein positiver Strom, also von der Anschlussklemme 2 zur Anschlussklemme 3 einstellen will. Eine entsprechende Schonzeit für den Thyristor 32 ist vorhanden. Bei dem Überspannungsableiter 33, der dem Thyristor 32 parallel geschaltet ist, handelt es sich beispielsweise um einen Varistor. Dieser Varistor ist so dimensioniert, dass bei der auftretenden TRV praktisch kein Stromfluss über den Überspannungsableiter 33 zugelassen wird. Der mechanische Schalter kann bei diesem Ausführungsbeispiel völlig stromlos geöffnet werden, da ein Stromfluss vom Thyristor verhindert wird. Der Thyristor ist dabei nur für geringe Spannungen, Spannungen deutlich kleiner der DC-Nennspannung, zu dimensionieren.

Figur 7 zeigt das Ausführungsbeispiel gemäß Figur 6, wobei jedoch die Schaltung für beide Stromrichtungen eingesetzt werden kann. Hierzu ist ein weiterer Thyristor 34 vorgesehen, der dem ersten Thyristor 32 gegensinnig parallel geschaltet ist. Die Wirkungsweise der Thyristoren 32, 34 entspricht jedoch der im Zusammenhang mit der in Figur 6 gezeigten Vorrichtung 1 erläuterten Wirkungsweise, wobei jedoch die Zündung der Thyristoren im Fehlerfall in jedem Falle ausgesetzt wird.

In Figur 8 ist eine weitere Ausgestaltung der erfindungsgemäßen Vorrichtung 1 gezeigt, die einer so genannten H-Schaltung entspricht. Bei diesem Ausführungsbeispiel der erfindungsgemäßen Vorrichtung 1 sind im Betriebsstrompfad 5 zwei mechanische Schalter 7 und 23 angeordnet. Weiterhin ist ein Nebenstromzweig 24 vorgesehen, der sich in Parallelschaltung zum Betriebsstrompfad 5 zwischen den Anschlussklemmen 2 und 3 erstreckt, wobei zwei Verzweigungspunkte 20 und 22 zwischen Betriebsstrompfad 5 und Nebenstromzweig 24 ausgebildet sind. Im Nebenstromzweig 24 sind zwei Dioden 25 und 26 als Leistungshalbleiter mit einander entgegengesetzter Durchlassrichtung angeordnet. Zwischen den mechanischen Schaltern 7 und 23 des Betriebsstrompfads 5 ist ein Mittelzweigpotenzialpunkt 27 des Betriebsstrompfads 5 ausgebildet. Zwischen den beiden Dioden 25 und 26 liegt der Mittelzweigpotenzialpunkt 28 des Nebenstromzweigs. Zwischen den besagten beiden Mittelzweigpotenzialpunkten 27 und 28 erstreckt sich der Abschaltzweig 6 mit der Leistungsschalteinheit 9, die ansonsten der Leistungsschalteinheit 9 gemäß den Figuren 1 bis 6 entspricht. Zwischen dem Mittelzweigpotenzialpunkt 27 des Betriebsstrompfads 5 und jedem mechanischen Schalter 7 und 23 sind wieder induktive Bauteile 8 angeordnet, welche die Induktivität L3 beziehungsweise L3' aufweisen. Bei Normalbetrieb fließt aufgrund des hohen Spannungsabfalls des konstanten Laststroms an der Leistungsschalteinheit 9 der Strom allein über den Betriebsstrompfad 5 somit durch beide Schalter 7 und 23 und die dort angeordneten induktiven Bauteile 8. Bei einem Stromanstieg im Kurzschlussfall wollen beide induktiven Bauteile 8 einen Stromanstieg verhindern. Aufgrund der im Nebenstromzweig 24 angeordneten Dioden 25 und 26 kann dies jedoch nur in dem Zweig erfolgen, dessen Schalter geöffnet werden soll. Fließt der Strom von der Anschlussklemme 2 zu Anschlussklemme 3, ist dies der mechanische Schalter 23. Der Strom kommutiert dann in den Abschaltzweig 6 und fließt über die Diode 26 zur Anschlussklemme 3.

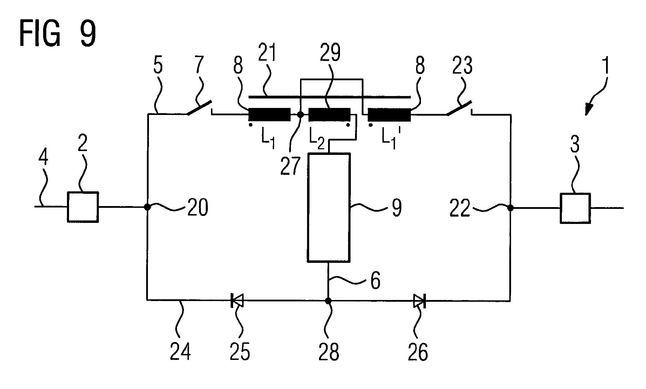

Figur 9 zeigt ein weiteres Ausführungsbeispiel der erfindungsgemäßen Vorrichtung 1. Dieses Ausführungsbeispiel unterscheidet sich von der in Figur 7 gezeigten Variante dadurch, dass neben den beiden induktiven Bauteilen 8 im Betriebsstrompfad 5 ein weiteres induktives Bauteil 29 im Abschaltstromzweig 6 angeordnet ist, wobei alle drei induktiven Bauteile 8 und 29 über einen Kern 21 aus einem ferromagnetischen Material induktiv miteinander gekoppelt sind. Im Normalbetrieb fließt der konstante Laststrom über den Betriebsstromzweig 5 mit den Schaltern 7 und 23. Bei einem Stromanstieg in Folge eines Kurzschlusses sind die induktiven Bauteile 8 und 29 wirksam, wobei aufgrund der Ausrichtung der Dioden 25 und 26 der Strom in den Abschaltzweig 6 kommutiert. Aufgrund des induktiven Bauteils 29 im Abschaltzweig 6, das bezüglich des induktiven Bauteils 8 im Betriebsstrompfad eine entgegengesetzte Wicklungsrichtung und die gleiche Wicklungsanzahl aufweist, stellt sich aufgrund der induktiven Kopplung durch den Kern 21 für den in den Abschaltzweig 6 kommutierten Strom eine wirksame Induktivität von null ein. Dies begünstigt die Kommutierung des Stroms in den Abschaltzweig 6 noch weiter.

Bei einer weiteren figürlich nicht dargestellten Variante fehlt das dritte induktive Bauteil 29 im Abschaltzweig 6, wobei die induktiven Bauteile 8 im Betriebsstrompfad 5 miteinander gekoppelt sind. Bei dieser Variante wird der Stromanstieg in dem zu öffnenden Schalter 23 verhindert. Der konstante Laststrom fließt jedoch auch weiterhin über den Schalter 23. Bei dieser Ausgestaltung muss daher die Leistungselektronik der Abschalteinheit 9 für eine aktive Kommutierung des verbleibenden über den Schalter 23 fließenden Stromes sorgen. Dies kann beispielsweise durch Induzierung eines über die Verzweigungspunkte 27, 28 und 22 fließenden Stromes erfolgen, dessen Richtung dem konstanten Laststrom im Betriebsstrompfad entgegengesetzt ist.

## Patentansprüche

1. Vorrichtung (1) zum Schalten eines Gleichstromes in einem Pol (4) eines Gleichspannungsnetzes mit
- zwei Anschlussklemmen (2,3) zum seriellen Verbinden mit dem Pol (4),
- einem sich zwischen den Anschlussklemmen (2,3) erstreckenden Betriebsstromzweig (5), in dem wenigstens ein mechanischer Schalter (7,23) angeordnet ist,
- einem Abschaltzweig (6), in dem eine zum Abschalten hoher Fehlerströme eingerichtete Leistungsschalteinheit (9) angeordnet ist, die ein- und abschaltbare Leistungshalbleiterschalter (14) aufweist, und
- Kommutierungsmitteln (8,9,18,19,20,29, 30, 31) zum Kommutieren des Stromes von dem Betriebsstrompfad (5) auf den Abschaltzweig (6),
**dadurch gekennzeichnet, dass**
die Kommutierungsmittel (8,9,18,19,20,29,30,31) wenigstens ein induktives Bauteil (8,18,19,29, 30,31) aufweisen.

2. Vorrichtung (1) nach Anspruch 1,
**dadurch gekennzeichnet, dass**
die Kommutierungsmittel wenigstens zwei induktive Bauteile (18,19,30,31) aufweisen, die induktiv miteinander gekoppelt sind.

3. Vorrichtung (1) nach Anspruch 1 oder 2,
**dadurch gekennzeichnet, dass**
die Kommutierungsmittel ansteuerbare Leistungshalbleiterschalter (14,32,34) aufweisen, die zumindest teilweise zum Erzeugen einer Gegenspannung eingerichtet sind, welche die Fehlerströme in dem oder den zu öffnenden mechanischen Schaltern (7,23) unterdrückt.

4. Vorrichtung (1) nach Anspruch 3,
**dadurch gekennzeichnet, dass**
die ansteuerbaren Leistungshalbleiterschalter wenigstens einen im Betriebsstrompfad angeordneten Thyristor (32,34) umfassen.

5. Vorrichtung (1) nach einem der vorhergehenden Ansprüche,
**dadurch gekennzeichnet, dass**
in dem Betriebsstrompfad (5) zwei mechanische Schalter (7,23) angeordnet sind, wobei sich in Parallelschaltung zum Betriebsstrompfad (5) zwischen den Anschlussklemmen (2,3) ein Nebenstromzweig (24) erstreckt, in dem ebenfalls zwei mechanische Schalter und/oder zwei Leistungshalbleiter (25,26) angeordnet sind, wobei der Abschaltzweig (6) einen zwischen den mechanischen Schaltern (7,23) angeordneten Mittelzweigpotenzialpunkt (27) des Betriebsstrompfades (5) mit einem zwischen den mechanischen Schaltern oder den Leistungshalbleitern (25,26) angeordneten Mittelzweigpotenzialpunkt (28) des Nebenstromzweiges (24) verbindet.

6. Vorrichtung (1) nach Anspruch 5,
**dadurch gekennzeichnet, dass**
induktive Bauteile (8) zwischen dem Mittelzweigpotenzialpunkt (27) des Betriebsstrompfades (5) und einem der Schalter (7,23) und/oder zwischen dem Mittelzweigpotenzialpunkt (28) des Nebenstromzweiges (24) und einem der Schalter oder der Leistungshalbleiter (25,26) angeordnet ist.

7. Vorrichtung (1) nach Anspruch 6,
**dadurch gekennzeichnet, dass**
wenigstens ein induktives Bauteil (29) im Abschaltzweig (6) angeordnet ist und mit wenigstens einem induktiven Bauteil (8) des Betriebsstrompfads (5) und/oder des Nebenstromzweiges (24) induktiv gekoppelt ist.

8. Vorrichtung (1) nach einem der Ansprüche 1 bis 4,
**dadurch gekennzeichnet, dass**
der Betriebsstrompfad (5) durch den Abschaltzweig (6) überbrückbar ist.

9. Vorrichtung (1) nach Anspruch 8,
**dadurch gekennzeichnet, dass**
wenigstens ein induktives Bauteil (18) in dem von dem Abschaltzweig überbrückten Abschnitt des Betriebsstrompfades angeordnet ist.

10. Vorrichtung (1) nach Anspruch 8,
**dadurch gekennzeichnet, dass**
ein induktives Bauteil (18) zwischen einer Anschlussklemme (2,3) und einem Verzweigungspunkt (20,22) zwischen Betriebsstrompfad (5) und Abschaltzweig (6) angeordnet und mit einem weiteren induktiven Bauteil (19) induktiv gekoppelt ist, das im Betriebsstrompfad (5) oder im Abschaltzweig (6) angeordnet ist.

11. Vorrichtung (1) nach Anspruch 8,
**dadurch gekennzeichnet, dass**
zwischen jeder Anschlussklemme (2,3) und jedem Verzweigungspunkt (20,22) zwischen Betriebsstrompfad (5) und Abschaltzweig (6) ein induktives Bauteil (18) angeordnet und mit einem weiteren induktiven Bauteil (19) induktiv gekoppelt ist, das im Betriebsstrompfad (5) oder im Abschaltzweig (6) angeordnet ist.

12. Vorrichtung (1) nach Anspruch 10 oder 11,
**dadurch gekennzeichnet, dass**
die miteinander induktiv gekoppelten induktiven Bauteile (18,19,30,31) Wicklungen aufweisen, die einander entgegengesetzte Wicklungsrichtungen aufweisen.

13. Vorrichtung (1) nach Anspruch 12,
**dadurch gekennzeichnet, dass**
die Anzahl der Wicklungen der beiden induktiven Bauteile (18,19,30,31) gleich ist.

14. Vorrichtung (1) nach Anspruch 12,
**dadurch gekennzeichnet, dass**
die Anzahl der Wicklungen der beiden induktiv miteinander gekoppelten induktiven Bauteile (18,19,30,31) unterschiedlich ist.

15. Vorrichtung (1) nach einem der vorhergehenden Ansprüche,
**dadurch gekennzeichnet, dass**
die Leistungsschalteinheit (9) eine Reihenschaltung von zweipoligen Submodulen (10) mit wenigstens einem ein- und abschaltbaren Leistungshalbleiterschalter (14) und Mitteln zum Abbau einer beim Schalten freiwerdenden Energie aufweist.

16. Vorrichtung (1) nach Anspruch 15,
**dadurch gekennzeichnet, dass**
jedes Submodul (10) einen Energiespeicher (11) und eine dem Energiespeicher (11) parallel geschaltete Leistungshalbleiterschaltung (12,13) aufweist, so dass an den beiden Anschlussklemmen (16,17) eines jeden Submoduls (10) entweder die an dem Energiespeicher (11) abfallende Spannung oder aber eine Nullspannung erzeugbar ist.

17. Vorrichtung (1) nach Anspruch 1 oder 2,
**dadurch gekennzeichnet, dass**
die Kommutierungsmittel ausschließlich induktive Bauteile (8,18,19,20,29,30,31) aufweisen.

## Claims

1. Device (1) for switching a direct current in a pole (4) of a direct current network comprising
- two connection terminals (2, 3) for connection in series to the pole (4),
- an operating current branch (5), which extends between the connection terminals (2, 3) and in which at least one mechanical switch (7, 23) is arranged,
- a disconnection branch (6), in which a power switching unit (9) is arranged, which is designed for disconnecting high fault currents and has a power semiconductor switch (14) which can be switched on and off, and
- commutation means (8, 9, 18, 19, 20, 29, 30, 31) for commutating the current from the operating current path (5) onto the disconnection branch (6),
**characterized in that** the commutation means (8, 9, 18, 19, 20, 29, 30, 31) have at least one inductive component part (8, 18, 19, 29, 30, 31).

2. Device (1) according to Claim 1,
**characterized in that**
the commutation means have at least two inductive component parts (18, 19, 30, 31), which are coupled inductively to one another.

3. Device (1) according to Claim 1 or 2,
**characterized in that**
the commutation means have drivable power semiconductor switches (14, 32, 34), which are at least partially designed to generate a back-emf which suppresses the fault currents in the mechanical switch(es) (7, 23) to be opened.

4. Device (1) according to Claim 3,
**characterized in that**
the drivable power semiconductor switches comprise at least one thyristor (32, 34) arranged in the operating current path.

5. Device (1) according to one of the preceding claims,
**characterized in that**
two mechanical switches (7, 23) are arranged in the operating current path (5), wherein a shunt current branch (24) extends in a parallel circuit with respect to the operating current path (5) between the connection terminals (2, 3), in which shunt current branch likewise two mechanical switches and/or two power semiconductors (25, 26) are arranged, wherein the disconnection branch (6) connects a central branch potential point (27) of the operating current path (5), which central branch potential point is arranged between the mechanical switches (7, 23), to a central branch potential point (28) of the shunt current branch (24), which central branch potential point (28) is arranged between the mechanical switches or the power semiconductors (25, 26).

6. Device (1) according to Claim 5,
**characterized in that**
inductive component parts (8) are arranged between the central branch potential point (27) of the operating current path (5) and one of the switches (7, 23) and/or between the central branch potential point (28) of the shunt current branch (24) and one of the switches or the power semiconductors (25, 26).

7. Device (1) according to Claim 6,
**characterized in that**
at least one inductive component part (29) is arranged in the disconnection branch (6) and is inductively coupled to at least one inductive component part (8) of the operating current path (5) and/or the shunt current branch (24).

8. Device (1) according to one of Claims 1 to 4,
**characterized in that**
the operating current path (5) can be bypassed by the disconnection branch (6).

9. Device (1) according to Claim 8,
**characterized in that**
at least one inductive component part (18) is arranged **in that** section of the operating current path which is bypassed by the disconnection branch.

10. Device (1) according to Claim 8,
**characterized in that**
an inductive component part (18) is arranged between a connection terminal (2, 3) and a junction (20, 22) between the operating current path (5) and the disconnection branch (6) and is inductively coupled to a further inductive component part (19), which is arranged in the operating current path (5) or in the disconnection branch (6).

11. Device (1) according to Claim 8,
**characterized in that**
an inductive component part (18) is arranged between each connection terminal (2, 3) and each junction (20, 22) between the operating current path (5) and the disconnection branch (6) and is inductively coupled to a further inductive component part (19), which is arranged in the operating current path (5) or in the disconnection branch (6).

12. Device (1) according to Claim 10 or 11,
**characterized in that**
the inductive component parts (18, 19, 30, 31) which are inductively coupled to one another have windings, which have mutually opposite winding directions.

13. Device (1) according to Claim 12,
**characterized in that**
the number of windings of the two inductive component parts (18, 19, 30, 31) is the same.

14. Device (1) according to Claim 12,
**characterized in that**
the number of windings of the two inductive component parts (18, 19, 30, 31) which are coupled inductively to one another is different.

15. Device (1) according to one of the preceding claims,
**characterized in that**
the power switching unit (9) has a series circuit comprising two-pole submodules (10) having at least one power semiconductor switch (14) which can be switched on and off and means for decaying energy released during switching.

16. Device (1) according to Claim 15,
**characterized in that**
each submodule (10) has an energy store (11) and a power semiconductor circuit (12, 13) connected in parallel with the energy store (11) so that either the voltage drop across the energy store (11) or a zero voltage can be generated at the two connection terminals (16, 17) of each submodule (10).

17. Device (1) according to Claim 1 or 2,
**characterized in that**
the commutation means have exclusively inductive component parts (8, 18, 19, 20, 29, 30, 31).

## Revendications

1. Dispositif ( 1 ) de commutation d'un courant continu dans un pôle ( 4 ) d'un réseau à tension continue, comprenant
- deux bornes ( 2, 3 ) de connexion pour la liaison série au pôle ( 4 ),
- une branche ( 5 ) de courant de fonctionnement, qui s'étend entre les deux bornes ( 2, 3 ) de connexion et dans laquelle est monté au moins un interrupteur ( 7, 23 ) mécanique,
- une branche ( 6 ) de déconnexion dans laquelle est montée une unité ( 9 ) de disjonction conçue pour interrompre des courants de fuite intenses et ayant un interrupteur ( 14 ) à semi-conducteur de puissance pouvant être fermé et ouvert et
- des moyens ( 8, 9, 18, 19, 20, 29, 30, 31 ) de commutation du courant du trajet ( 5 ) de courant de fonctionnement à la branche ( 6 ) de déconnexion,
**caractérisé en ce que**
les moyens ( 8, 9, 18, 19, 20, 29, 30, 31 ) de commutation ont au moins un composant ( 8, 18, 19, 29, 30, 31 ) inductif.

2. Dispositif ( 1 ) suivant la revendication 1,
**caractérisé en ce que** les moyens de commutation ont au moins deux composants ( 18, 19, 30, 31 ) inductifs qui sont couplés entre eux par induction.

3. Dispositif ( 1 ) suivant la revendication 1 ou 2,
**caractérisé en ce que**
les moyens de commutation ont des interrupteurs ( 14, 32, 34 ) à semi-conducteur de puissance, qui peuvent être commandés et qui sont conçus au moins en partie pour produire une pression antagoniste qui supprime les courants de fuite dans le ou dans les interrupteurs ( 7, 23 ) mécaniques à ouvrir.

4. Dispositif ( 1 ) suivant la revendication 3,
**caractérisé en ce que**
les interrupteurs à semi-conducteur de puissance, qui peuvent être commandés, comprennent au moins un thyristor ( 32, 34 ) monté dans le trajet de courant de fonctionnement.

5. Dispositif ( 1 ) suivant l'une des revendications précédentes,
**caractérisé en ce qu'**
il est monté dans le trajet ( 5 ) de courant de fonctionnement deux interrupteurs ( 7, 23 ) mécaniques, dans lequel il s'étend, suivant un montage en parallèle au trajet ( 5 ) de courant de fonctionnement entre les bornes ( 2, 3 ) de connexion, une branche ( 24 ) de courant secondaire, dans laquelle sont montés également deux interrupteurs mécaniques et/ou deux semi-conducteurs ( 25, 26 ) de puissance, la branche ( 6 ) de déconnexion reliant un point ( 27 ) de potentiel de branche médian, disposé entre les interrupteurs ( 7, 23 ) mécaniques, du trajet ( 5 ) de courant de fonctionnement à un point ( 28 ) de potentiel de branche médian, disposé entre les interrupteurs mécaniques ou entre les semi-conducteurs ( 25, 26 ) de puissance, de la branche ( 24 ) de courant secondaire.

6. Dispositif ( 1 ) suivant la revendication 5,
**caractérisé en ce que**
des composants ( 8 ) inductifs sont disposés entre le point ( 27 ) de potentiel de branche médian du trajet ( 5 ) de courant de fonctionnement et l'un des interrupteurs ( 7, 23 ) et/ou entre le point ( 28 ) de potentiel de branche médian de la branche ( 24 ) secondaire et l'un des interrupteurs ou des semi-conducteurs ( 25, 26 ) de puissance.

7. Dispositif ( 1 ) suivant la revendication 6
**caractérisé en ce qu'**
au moins un composant ( 29 ) inductif est monté dans la branche ( 6 ) de déconnexion et couplé par induction avec au moins un composant ( 8 ) inductif du trajet ( 5 ) de courant de fonctionnement et/ou de la branche ( 24 ) de courant secondaire.

8. Dispositif ( 1 ) suivant l'une des revendications 1 à 4,
**caractérisé en ce qu'**
le trajet ( 5 ) de courant de fonctionnement peut être shunté par la branche ( 6 ) de déconnexion.

9. Dispositif ( 1 ) suivant la revendication 8,
**caractérisé en ce qu'**
au moins un composant ( 18 ) inductif est monté dans la partie, shuntée par la branche de déconnexion, du trajet de courant de fonctionnement.

10. Dispositif ( 1 ) suivant la revendication 8,
**caractérisé en ce qu'**
un composant ( 18 ) inductif est monté entre une borne ( 2, 3 ) de connexion et un point ( 20, 22 ) de dérivation entre le trajet ( 5 ) de courant de fonctionnement et la branche ( 6 ) de déconnexion et est couplé par induction à un autre composant ( 19 ) inductif, qui est monté dans le trajet ( 5 ) de courant de fonctionnement ou dans la branche ( 6 ) de déconnexion.

11. Dispositif ( 1 ) suivant la revendication 8,
**caractérisé en ce qu'**
il est monté entre chaque borne ( 2, 3 ) de connexion et chaque point ( 20, 22 ) de dérivation entre le trajet ( 5 ) de courant de fonctionnement et la branche ( 6 ) de déconnexion un composant ( 18 ) inductif, qui est couplé par induction à un autre composant ( 19 ) inductif monté dans le trajet ( 5 ) de courant de fonctionnement ou dans la branche ( 6 ) de déconnexion.

12. Dispositif ( 1 ) suivant la revendication 10 ou 11,
**caractérisé en ce que**
les composants ( 18, 19, 30, 31 ) inductifs couplés entre eux par induction ont des enroulements qui ont des sens d'enroulement opposés l'un à l'autre.

13. Dispositif ( 1 ) suivant la revendication 12,
**caractérisé en ce que**
les nombres des enroulements des deux composants ( 18, 19, 30, 31 ) inductifs sont égaux.

14. Dispositif ( 1 ) suivant la revendication 12,
**caractérisé en ce que**
les nombres des enroulements des deux composants ( 18, 19, 30, 31 ) inductifs couplés entre eux par induction sont différents.

15. Dispositif ( 1 ) suivant l'une des revendications prédédentes,
**caractérisé en ce que**
l'unité ( 9 ) de disjonction comporte un circuit série de sous-modules ( 10 ) bipolaires, ayant au moins un interrupteur ( 14 ) à semi-conducteur de puissance pouvant être fermé et ouvert et des moyens de dissipation d'une énergie libérée à la commutation.

16. Dispositif ( 1 ) suivant la revendication 15,
**caractérisé en ce que**
chaque sous-module ( 10 ) a un accumulateur ( 11 ) d'énergie et un circuit ( 12, 13 ) à semi-conducteur de puissance monté en parallèle à l'accumulateur ( 11 ) d'énergie, de manière à pouvoir produire, sur les deux bornes ( 16, 17 ) de connexion de chaque sous-module ( 10 ), soit la tension chutant aux bornes de l'accumulateur ( 11 ) d'énergie, soit une tension nulle.

17. Dispositif ( 1 ) suivant la revendication 1 ou 2,
**caractérisé en ce que**
les moyens de commutation ont exclusivement des composants ( 8, 18, 19, 20, 29, 30, 31 ) inductifs.
